# EUROPÄISCHE PATENTANMELDUNG

(11) **EP 4 209 383 A1**
(43) Veröffentlichungstag der Anmeldung: **12.07.2023**
(21) Anmeldenummer: 23150921.7
(22) Anmeldetag: 10.01.2023
(51) Int. Cl.: B60L 50/64, H01M 50/207, H01M 50/224, H01M 50/244, H01M 50/249, H01M 50/258

(54) **BATTERIEGEHÄUSE FÜR EINE FAHRZEUGBATTERIE UND FAHRZEUGBATTERIE**

(30) Priorität: 10.01.2022 DE 102022100410
(71) Anmelder: Webasto SE, 82131 Stockdorf (DE)
(72) Erfinder: Meyer, Mario, 82131 Stockdorf (DE)
(74) Vertreter: Nordmeyer, Philipp Werner

(57) **Zusammenfassung**

Die vorliegende Erfindung betrifft ein 1. Batteriegehäuse (1) für eine Fahrzeugbatterie (26), umfassend mindestens zwei in einer Stapelrichtung (2) übereinander gestapelter Wandelemente (3) zum Ausbilden je einer Gehäusewand, wobei jedes Wandelement (3) ein Paar (12) aus einer Durchgangsbohrung (14) und einer in einer Ebene senkrecht zur Stapelrichtung (2) neben der Durchgangsbohrung (14) angeordneten Gewindebohrung (13) zum Anschrauben eines in Stapelrichtung (2) direkt benachbarten Wandelementes (3) umfasst, wobei die Gewindebohrungen (13) und Durchgangsbohrungen (14) in Bezug auf die Stapelrichtung (2) alternierend übereinander angeordnet sind; sie betrifft ferner eine Fahrzeugbatterie (26) mit einem derartigen Batteriegehäuse (1).

## Beschreibung

### Technisches Gebiet

Die vorliegende Erfindung betrifft ein Batteriegehäuse für eine Fahrzeugbatterie und eine Fahrzeugbatterie zur Bereitstellung der Primärenergie eines Hauptantriebes eines Elektrofahrzeugs.

### Stand der Technik

Es ist bekannt, im Bereich von Fahrzeugbatterien die für die Bereitstellung der elektrischen Energie vorgesehenen Bauteile, mithin die Batteriezellen und die elektrischen Kontaktierungsmittel wie Sammelschienen usw. durch ein Gehäuse von der Umgebung abzuschirmen.

Eine vorgegebene Mehrzahl von Batteriezellen wird oftmals zu einem Batteriemodul gruppiert, welches dann ein Hochvolt-Bauteil darstellen kann. Ein Batteriemodul weist in vielen Fällen ein eigenes Modulgehäuse auf, welches zumindest ein Wandelement umfasst, und welches die elektrischen Komponenten des Batteriemoduls einhaust.

Die elektrischen Komponenten können beispielsweise Batteriezellen, Steuerelektronik und/oder Sensoren umfassen. Die Batteriezellen können beispielsweise zylindrische Batteriezellen, prismatische Batteriezellen und/oder Pouchzellen sein.

Insbesondere bei Fahrzeugbatterien, welche die Primärenergie des Hautpantriebes eines Fahrzeugs bereitstellen, wie bei Elektrofahrzeugen der Fall, wird die Fahrzeugbatterie in der Regel aus einer Mehrzahl von Batteriemodulen ausgebildet. Zum Ausbilden der Fahrzeugbatterie können Batteriemodule in einer Stapelrichtung übereinander gestapelt werden. Die Modulgehäuse benachbarter, übereinander gestapelter Batteriemodule werden zur Fixierung der Module zueinander durch sich in Stapelrichtung erstreckende Schraubverbindungen miteinander verschraubt und bilden so ein zusammenhängendes Batteriegehäuse der Fahrzeugbatterie aus. Man spricht dann von einem mehrstöckigen Batteriegehäuse. Bei herkömmlichen mehrstöckigen Batteriegehäusen muss das zum Einschrauben der Schraube der Schraubverbindung verwendete Werkzeug bauraumbedingt unter einem gewissen Winkel zur Stapelrichtung an die Schraube herangeführt werden. Daraus können sich einige Nachteile ergeben. Beispielsweise ist eventuell eine spezielle Form der Werkzeugklinge bzw. der Spitze der Werkzeugklinge vorzusehen, beispielsweise eine Spezialanfertigung eines Kugelkopf-förmigen Bits. Ferner kann die Zugänglichkeit zur Verschraubung erschwert sein. Bei schräg herangeführtem Werkzeug mag ebenfalls eine zuverlässige Drehmomentüberwachung nur erschwert möglich sein. Ferner kann aus einem schräg herangeführtem Werkzeug theoretisch ein schiefes Einschrauben der Schraube resultieren.

### Darstellung der Erfindung

Ausgehend von dem bekannten Stand der Technik ist es eine Aufgabe der vorliegenden Erfindung, ein verbessertes Batteriegehäuse für eine Fahrzeugbatterie sowie eine verbesserte Fahrzeugbatterie bereitzustellen. Insbesondere wird durch die vorgenannte Verbesserung zumindest einer der zuvor beschriebenen Nachteile adressiert.

Die Aufgabe wird durch ein Batteriegehäuse für eine Fahrzeugbatterie mit den Merkmalen des Anspruchs 1 gelöst. Vorteilhafte Weiterbildungen ergeben sich aus den Unteransprüchen, der Beschreibung und den Figuren.

Entsprechend wird ein Batteriegehäuse für eine Fahrzeugbatterie vorgeschlagen, umfassend mindestens zwei in einer Stapelrichtung übereinander gestapelte Wandelemente zum Ausbilden je einer Gehäusewand.

Das Batteriegehäuse ist dadurch gekennzeichnet, dass jedes Wandelement ein Paar aus einer Durchgangsbohrung und einer in einer Ebene senkrecht zur Stapelrichtung neben der Durchgangsbohrung angeordneten Gewindebohrung zum Anschrauben eines in Stapelrichtung direkt benachbarten Wandelementes umfasst, wobei die Gewindebohrungen und Durchgangsbohrungen in Bezug auf die Stapelrichtung alternierend übereinander angeordnet sind.

Als "übereinander" wird hier eine Anordnung ohne Versatz zueinander senkrecht zur Stapelrichtung verstanden. Mit anderen Worten weist jedes Wandelement ein Paar aus Bohrungen auf, wobei jeweils eine der Bohrungen als Gewindebohrung und die jeweils andere der Bohrungen als Durchgangsbohrung ausgebildet ist. In Bezug auf die Stapelrichtung sind die Gewindebohrungen und Durchgangsbohrungen alternierend angeordnet. Das heißt, in Stapelrichtung betrachtet folgt nach der Durchgangsbohrung eines ersten Wandelements eine Gewindebohrung des benachbarten Wandelements bzw. liegt über der Durchgangsbohrung des Paares aus Bohrungen des ersten Wandelements die Gewindebohrung des Paares aus Bohrungen des benachbarten Wandelements, und in Stapelrichtung betrachtet folgt nach der Gewindebohrung des ersten Wandelements eine Durchgangsbohrung des benachbarten Wandelements bzw. liegt über der Gewindebohrung des Paares aus Bohrungen des ersten Wandelements die Durchgangsbohrung des Paares aus Bohrungen des benachbarten Wandelements.

Folglich sind die Paare der Wandelemente in Stapelrichtung übereinander angeordnet.

Nochmals anderes ausgedrückt ist Anordnung von Gewindebohrung und Durchgangsbohrung bei benachbarten Wandelementen gegengleich. In Stapelrichtung betrachtet sind mithin Gewindebohrungen und Durchgangsbohrungen abwechselnd angeordnet und liegen in Stapelrichtung übereinander.

Das Batteriegehäuse umfasst folglich zwei in einem vorgegebenen Abstand zueinander angeordnete, in Stapelrichtung orientierte Achsen, wobei bei jedem Wandelement jeweils eine Bohrung des Paares auf einer Achse der beiden Achsen und die jeweils andere Bohrung des Paares auf der anderen Achse der beiden Achsen liegt, anders ausgedrückt im Wesentlichen konzentrisch zur jeweiligen Achse angeordnet ist.

Dadurch, dass jedes Wandelement ein Paar aus einer Durchgangsbohrung und einer in einer Ebene senkrecht zur Stapelrichtung neben der Durchgangsbohrung angeordneten Gewindebohrung zum Anschrauben eines in Stapelrichtung direkt benachbarten Wandelementes umfasst, wobei die Gewindebohrungen und Durchgangsbohrungen in Bezug auf die Stapelrichtung alternierend übereinander angeordnet sind, ist es möglich, benachbarte Wandelemente ohne Winkelversatz des verwendeten Werkzeugs zur Stapelrichtung miteinander zu verschrauben.

Das Werkzeug, insbesondere eine Werkzeugklinge des Werkzeuges kann nämlich parallel zur Stapelrichtung durch die Durchgangsbohrung des neu aufgesetzten Wandelements geführt werden. Da die Gewindebohrung des darunter gelegenen, benachbarten Wandelements genau unterhalb der Durchgangsbohrung des oberen, darüber gelegenen benachbarten Wandelements liegt, liegt die Werkzeugklinge dann im Wesentlichen konzentrisch zur Gewindebohrung in Stapelrichtung orientiert vor.

Folglich kann dadurch eine zur Verschraubung der benachbarten Wandelemente vorgesehene Schraube mit dem in Stapelrichtung orientierten Werkzeug in die in Stapelrichtung orientierte Gewindebohrung geschraubt werden. So kann die Gefahr eines schrägen Einschraubens der Schraube vermindert oder gar gänzlich vermieden werden. Ferner kann ein Werkzeug mit einem Standard-Bit verwendet werden. Zudem kann das beim Verschrauben aufgebrachte Drehmoment bzw. Anzugsmoment aufgrund eines fehlenden Winkelversatzes besonders exakt ermittelt und/oder eingestellt werden. Insbesondere kann ferner die Zugänglichkeit der Gewindebohrung des unteren der benachbarten Wandelemente für einen die Wandelemente verschraubenden Person im Vergleich zu herkömmlichen mehrstöckigen Batteriegehäusen erleichtert sein.

Die Gewindebohrung kann als durchgehende Gewindebohrung, oder als Sackloch-Gewindebohrung ausgebildet sein. Die Tiefe des Gewindes der Gewindebohrung kann kürzer sein als die Gesamttiefe der Gewindebohrung oder sich alternativ über die Gesamtlänge der Gewindebohrung erstrecken.

Gemäß einer bevorzugten Ausführungsform weist jedes Wandelement in Stapelrichtung gesehen auf einer ersten Seite das Paar aus Bohrungen auf, und weist bevorzugt auf einer der ersten Seite in Stapelrichtung gegenüberliegenden zweiten Seite ein Flansch zum Anflanschen an die Gewindebohrung des dort direkt benachbarten Wandelements auf.

Vorzugsweise umfasst der Flansch eine Öffnung zum Durchführen eines Gewindeabschnitts einer in die Gewindebohrung des benachbarten Wandelements geschraubten bzw. zu schraubenden Schraube, wobei bevorzugt die Öffnung und die Durchgangsbohrung eines Wandelements und/oder die Öffnung des zu verschraubenden Wandelements und die Gewindebohrung des benachbarten Wandelements, mit welchem das aktuell zu verschraubende Wandelement verschraubt werden soll, auf einer in Stapelrichtung orientierten gemeinsamen Achse liegen.

Mithin liegen die Öffnung und die Durchgangsbohrung eines Wandelements in Stapelrichtung übereinander, mithin auf dergleichen Position. Entsprechend liegen Öffnung und Durchgangsbohrung bei jedem Wandelement in Stapelrichtung beabstandet voneinander und auf einer sich in Stapelrichtung erstreckenden bzw. orientierten Achse im Wesentlichen konzentrisch zueinander.

Die Öffnung ist in Stapelrichtung gesehen auf einer Seite, beispielsweise der Unterseite des Wandelements, und die Durchgangsbohrung bzw. das Paar aus Bohrungen (Durchgangsbohrung und Gewindebohrung) auf der der einen Seite gegenüberliegenden anderen Seite des Wandelements, beispielsweise einer Oberseite des Wandelements angeordnet. Der Abstand zwischen Öffnung und Durchgangsbohrung entspricht mithin im Wesentlichen der Länge bzw. Höhe des Wandelements in Stapelrichtung.

Gemäß einer bevorzugten Weiterbildung kann die Öffnung einen Kreisquerschnitt aufweisen. Entsprechend weist sie bevorzugt die Form einer zylindrischen Durchgangsbohrung auf. Alternativ kann die Öffnung auch als Langloch ausgebildet sein, wobei die Längserstreckung des Langlochs dann bevorzugt senkrecht zur Stapelrichtung und längs bzw. parallel zu einer Haupterstreckung bzw. Breite des Wandelements, genauer einer Grundplatte des Wandelements, quer zur Stapelrichtung orientiert ist. Mit anderen Worten erstreckt sich die Längserstreckung des Langloches auf einer Ebene senkrecht zur Stapelrichtung parallel zur Wand des Wandelements.

Das Wandelement kann derart ausgebildet sein, dass dessen Flansch im Schnittbereich mit einer durch die Gewindebohrung dieses Wandelements verlaufenden Achse einen durchgehenden Bereich zum Abdecken der Durchgangsbohrung des in Stapelrichtung auf der Seite des Flansches benachbarten Wandelements umfasst.

Gemäß einer bevorzugten Ausführungsform sind die Wandelemente jeweils in Form eines Gussteils, bevorzugt eines Druckgussteils, ausgebildet, wobei bevorzugt die Bohrungen des Paares in am Wandelement angegossenen Domen ausgebildet sind, bevorzugt an einer Außenseite des Wandelements.

Bevorzugt ist jedes Wandelement auf einer Seite mit einem sich quer zur Stapelrichtung erstreckenden Bodenelement verbunden, wobei das Wandelement bevorzugt einstückig mit dem Bodenelement ausgebildet ist, bevorzugt als einstückiges Druckgussbauteil, welches dann entsprechend ein bevorzugt einstückiges Modulgehäuse darstellen kann.

Gemäß einer bevorzugten Ausführungsform umfasst jedes Wandelement eine sich in Stapelrichtung und senkrecht zu dieser erstreckende Grundplatte, wobei sich die Grundplatte bevorzugt in Stapelrichtung von einer ersten Seite zu einer zweiten Seite erstreckt, wobei sich bevorzugt mindestens eine Versteifungsrippe senkrecht von der Grundplatte erstreckt, bevorzugt an einer Außenseite des Wandelements, wobei sich bevorzugt zumindest eine Versteifungsrippe quer, bevorzugt senkrecht zur Stapelrichtung erstreckt und bevorzugt auf Höhe der Bohrungen zumindest eine Aussparung zum Durchführen eines Werkzeuges, bevorzugt einer Werkzeugklinge eines Schraubwerkzeuges, in Stapelrichtung umfasst.

Gemäß einer bevorzugten Ausführungsform sind die Gewindebohrung und die Durchgangsbohrung eines Paares senkrecht zur Stapelrichtung und parallel zur Erstreckung einer Grundplatte des Wandelements nebeneinander angeordnet.

Die Gewindebohrungen und die Durchgangsbohrungen erstrecken sich vorzugsweise in Stapelrichtung.

Gemäß einer bevorzugten Ausführungsform ist die Durchgangsbohrung zum Durchführen eines Werkzeugs, bevorzugt einer Werkzeugklinge eines Schraubwerkzeuges, in Stapelrichtung ausgebildet.

Gemäß einer bevorzugten Ausführungsform sind die Paare von Bohrungen in Stapelrichtung übereinander angeordnet.

Gemäß einer bevorzugten Ausführungsform ist die Gewindebohrung als durchgehende Bohrung ausgebildet. Insbesondere, wenn das Wandelement ein Gussteil, beispielsweise ein Druckgussteil oder ein Spritzgussteil, ist, können dann im Gussrohling bereits durchgängige Löcher vorgesehen sein, die in einem sich an das Urformen anschließenden Fertigungsschnitt entsprechend zur Gewindebohrung oder zur Durchgangsbohrung aufgebohrt werden.

Die oben gestellte Aufgabe wird weiterhin durch eine Fahrzeugbatterie zum Bereitstellen einer Primärenergie eines Elektrofahrzeuges mit den Merkmalen des Anspruchs 9 gelöst. Vorteilhafte Weiterbildungen ergeben sich aus der vorliegenden Beschreibung und den Figuren.

Entsprechend wird eine Fahrzeugbatterie vorgeschlagen, die zumindest eine Batteriezelle und ein Batteriegehäuse gemäß einer der vorstehenden Ausführungsformen umfasst.

Dadurch, dass die Fahrzeugbatterie ein Batteriegehäuse gemäß einer der vorstehenden Ausführungsformen umfasst, können die hinsichtlich des Batteriegehäuses beschriebenen Vorteile und Wirkungen in analoger Weise auch durch die Fahrzeugbatterie erzielt werden bzw. treffen in analoger Weise auch auf die Fahrzeugbatterie zu.

Die oben gestellte Aufgabe wird weiterhin durch ein Wandelement zum Ausbilden einer Gehäusewand in einem Batteriegehäuse, bevorzugt einem Fahrzeugbatteriegehäuse mit den Merkmalen des Anspruchs 10 gelöst. Vorteilhafte Weiterbildungen ergeben sich aus dem Unteranspruch, der vorliegenden Beschreibung und den Figuren.

Entsprechend wird ein Wandelement zum Ausbilden einer Gehäusewand in einem Batteriegehäuse, bevorzugt einem Fahrzeugbatteriegehäuse, vorgeschlagen, umfassend eine sich in einer Stapelrichtung von einer ersten Seite zu einer zweiten Seite erstreckende Grundplatte, auf der ersten Seite ein Paar aus einer Durchgangsbohrung und einer in einer Ebene senkrecht zur Stapelrichtung neben der Durchgangsbohrung angeordneten Gewindebohrung zum Anschrauben eines in Stapelrichtung an der ersten Seite direkt benachbarten Wandelementes und auf der zweiten Seite einen Flansch zum Anflanschen an ein an der zweiten Seite direkt benachbartes Wandelement, wobei der Flansch eine Öffnung zum Durchführen eines Gewindeabschnitts einer Schraube umfasst, wobei die Öffnung und die Durchgangsbohrung auf einer in Stapelrichtung orientierten gemeinsamen Achse liegen.

Durch das Wandelement werden die hinsichtlich des Batteriegehäuses beschriebenen Vorteile und Wirkungen in analoger Weise erzielt werden bzw. es treffen diese Vorteile und Wirkungen in analoger Weise auch für das Wandelement zu.

Gemäß einer bevorzugten Ausführungsform umfasst der Flansch im Schnittbereich mit einer durch die Gewindebohrung verlaufenden Achse einen durchgehenden Bereich zum Abdecken einer Durchgangsbohrung des an der zweiten Seite benachbarten Wandelements.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Schnittansicht durch eine Fahrzeugbatterie gemäß einer ersten Ausführungsform;
- Figur 2: schematisch eine perspektivische Seitenansicht eines Paares aus Gewindebohrung und Durchgangsbohrung eines Wandelements eines Batteriegehäuses der Fahrzeugbatterie aus Figur 1;
- Figur 3: schematisch eine perspektivische Seitenansicht eines Abschnitts eines Batteriegehäuses gemäß einer weiteren Ausführungsform; und
- Figur 4: schematisch eine Schnittansicht durch das Batteriegehäuse aus Figur 3.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

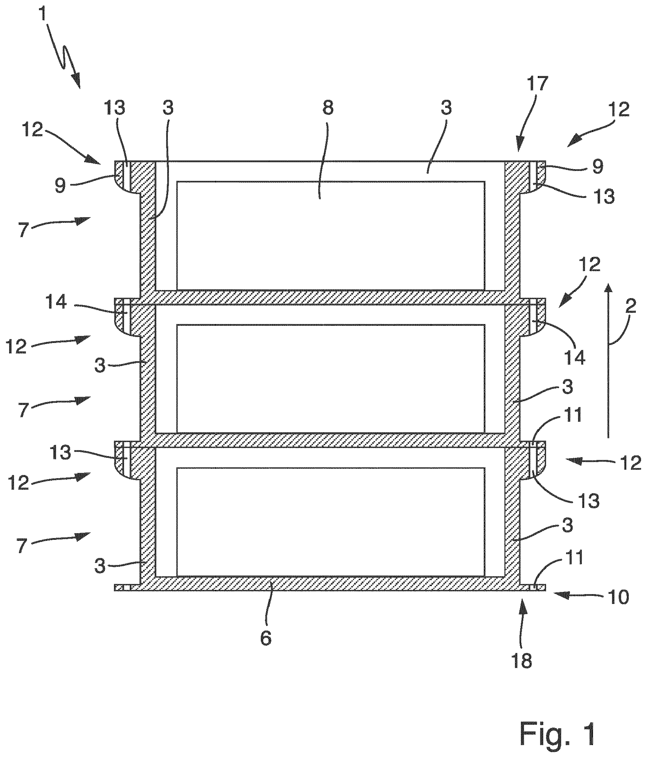

In Figur 1 ist schematisch eine Schnittansicht durch eine Fahrzeugbatterie 26, welche die Primärenergie eines Hauptantriebes eines Elektrofahrzeugs (nicht gezeigt) bereitstellt, zu entnehmen. Die Fahrzeugbatterie 26 weist ein mehrstöckiges Batteriegehäuse 1 auf, das eine Mehrzahl von in einer Stapelrichtung 2 übereinander gestapelter Modulgehäusen 7 umfasst. Vorliegend entspricht die Stapelrichtung 2 im Wesentlichen einer unten-oben Richtung in Bezug auf die Einbaulage der Fahrzeugbatterie 7 im Elektrofahrzeug, wiederum bezogen auf das dem Fachmann bekannten Hauptkoordinatensystem des Elektrofahrzeugs.

Jedes Modulgehäuse 7 umfasst ein Bodenelement 6 und sich seitlich an das Bodenelement 6 anschließende, einstückig mit dem Bodenelement 6 und mit den jeweiligen Nachbarn ausgebildete Wandelemente 3 zum Ausbilden je einer Gehäusewand. Entsprechend weist jedes Modulgehäuse 7 im Wesentlichen eine Wannen-Form auf.

In jedem Modulgehäuse 7 sind die ein Batteriemodul ausbildenden elektrischen Komponenten, welche hier schematisch mittels des Bezugszeichens 8 angedeutet sind, aufgenommen. Die elektrischen Komponenten 8 können beispielsweise Batteriezellen, Steuerelektronik und/oder Sensoren umfassen. Die Batteriezellen können beispielsweise zylindrische Batteriezellen, prismatische Batteriezellen und/oder Pouchzellen sein.

Jedes Wandelement 3 weist ein Paar 12 von Bohrungen 13, 14, jeweils bestehend aus einer Durchgangsbohrung 14 und einer in einer Ebene senkrecht zur Stapelrichtung 2 neben der Durchgangsbohrung 14 angeordneten Gewindebohrung 13 zum Anschrauben eines in Stapelrichtung 2 direkt benachbarten Wandelementes 3 auf.

Die Wandelemente 3, optional die Modulgehäuse 7, sind im Wesentlichen gleich geformt. Sie stellen mithin im Wesentlichen Gleichteile dar, mit Ausnahme der Anordnung der Bohrungen 13, 14 der Paare 12. Die Paare 12 der übereinander gestapelten Wandelemente 3 sind jeweils in Stapelrichtung 2 übereinander angeordnet.

In Hinblick auf benachbarte Wandelemente 3 sind die Gewindebohrungen 13 und die Durchgangsbohrungen 14 in Bezug auf die Stapelrichtung 2 alternierend übereinander angeordnet.

Wie ferner aus Figur 1 zu entnehmen, weist jedes Wandelement 3 in Stapelrichtung 2 gesehen auf einer ersten Seite 17 das Paar 12 aus Bohrungen 13, 14 auf (hier der Oberseite), und umfasst auf einer der ersten Seite in Stapelrichtung 2 gegenüberliegenden zweiten Seite 18 einen Flansch 10 zum Anflanschen an die Gewindebohrung 13 des dort benachbarten Wandelements 3. Der Flansch 10 weist zu diesem Zwecke eine Öffnung 11 zum Durchführen eines Gewindeabschnitts einer in die Gewindebohrung 13 geschraubten Schraube (hier nicht gezeigt) auf.

Die Öffnung 11 und die Durchgangsbohrung 14 eines Wandelements 3 liegen jeweils auf einer in Stapelrichtung 2 orientierten gemeinsamen Achse. Vorliegend weisen die Öffnungen 11 einen Kreisquerschnitt auf.

Die Modulgehäuse 7 sind jeweils in Form eines Gussteils, bevorzugt eines Druckgussteils, ausgebildet. Die Bohrungen 13, 14 der Paare 12 sind in am Wandelement 3 angegossenen Domen 6 ausgebildet, und zwar an einer Außenseite der Wandelemente 3.

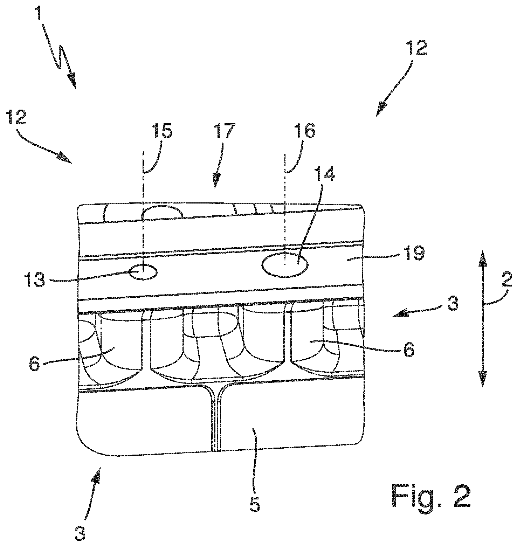

Figur 2 zeigt schematisch eine perspektivische Detail-Seitenansicht eines Paares 12 aus Gewindebohrung 13 und Durchgangsbohrung 14 eines Wandelements 3. Deutlich zu erkennen sind die sich in Bezug auf eine sich in Stapelrichtung 2 und senkrecht zu dieser erstreckende Grundplatte 5 des Wandelements 3 nach außen erstreckenden Dome 6 zu erkennen, wobei in einem der Dome 6 die Gewindebohrung 13 und im anderen Dom 6 die Durchgangsbohrung 14 ausgebildet sind. Zu erkennen ist, dass der Innendurchmesser der Durchgangsbohrung 14 größer ist als ein Gewindedurchmesser der Gewindebohrung 13. Die Durchgangsbohrung 14 ist zum Durchführen in Stapelrichtung 2 eines Werkzeugs, vorliegend einer Werkzeugklinge eines Schraubwerkzeuges, das zum Einschrauben der Befestigungsschraube in die Gewindebohrung 13 vorgesehen ist, ausgebildet.

Die Gewindebohrung 13 erstreckt sich entlang einer parallel zur Stapelrichtung 2 orientierten Achse 15 und die Durchgangsbohrung 14 erstreckt sich entlang einer mit einem vorgegebenen Abstand zur ersten Achse 15 angeordneten, parallel zur Stapelrichtung 2 orientierten Achse 16. Am oberen Ende, mithin der ersten Seite 17 umfasst das Wandelement 3 einen Absatz 19, welcher zum Anflanschen an den Flansch 10 des in Stapelrichtung 2 benachbarten Wandelements 3 (siehe Figur 1) oder zum Anbinden eines Gehäusedeckels (nicht gezeigt) dient.

Anders ausgedrückt sind die Gewindebohrung 13 und die Durchgangsbohrung 14 des Paares 12 in einer Richtung senkrecht zur Stapelrichtung 2 und parallel zur Erstreckung der Grundplatte 5 des Wandelements 3 nebeneinander angeordnet.

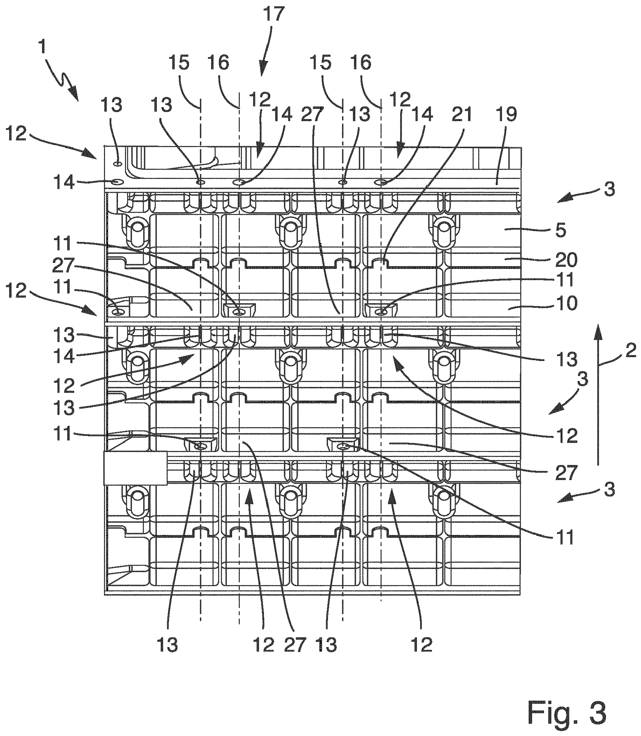

Figur 3 zeigt schematisch einen Abschnitt eines mehrstöckigen Batteriegehäuses 1 gemäß einer weiteren Ausführungsform. Das Batteriegehäuse 1 entspricht im Wesentlichen jenem aus den Figuren 1 und 2. Das in Figur 3 gezeigte Batteriegehäuse 1 weist Wandelemente 3 auf, die jeweils eine Mehrzahl von Paaren 12 an Bohrungen 13, 14 aufweisen. Die Paare 12 der Wandelemente 3 sind quer zur Stapelrichtung 2 entlang des Absatzes 19 gleichmäßig verteilt.

Die Paare 12 übereinander gestapelter Wandelemente 3 sind dabei in Bezug auf benachbarte Wandelemente 3 jeweils an den gleichen Positionen quer zur Stapelrichtung 2 betrachtet angeordnet. Mit anderen Worten liegt jeweils ein Paar 12 eines Wandelements 3 in Stapelrichtung 2 oberhalb und gegebenenfalls unterhalb eines jeweiligen Paares 12 des jeweils benachbarten Wandelements 3.

Anders ausgedrückt ist jeweils ein Paar 12 eines jeden Wandelements 3 jeweils einem Paar aus erster Achse 16 und zweiter Achse 17, wie in Figur 2 beschrieben, zugeordnet. Entsprechend liegen die dem Paar aus Achsen 16, 17 zugeordneten Paare 12 von Bohrungen 13, 14 übereinander gestapelter Wandelemente 3 in Stapelrichtung 2 übereinander. Dabei erstreckt sich jeweils eine der Bohrungen 13, 14 jedes dieser Paare 12 entlang der ersten Achse 15 und erstreckt sich jeweils die andere der Bohrungen 14, 13 jedes dieser Paare 12 entlang der zweiten Achse 16. Die Gewindebohrungen 13 und Durchgangsbohrungen 14 sind dabei alternierend angeordnet.

Wie aus Figur 3 zu entnehmen, weist der Flansch 10 jedes Wandelements 3 eine Öffnung 11 fluchtend bzw. im Wesentlichen konzentrisch zur sich durch die Durchgangsbohrung 14 erstreckende Achse, welche beispielhaft für das in Figur 3 oberste Wandelement 3 die Achse 16 ist, auf. Da die Gewindebohrung 13 des direkt benachbarten Wandelement 3 - in Figur 3 das mittlere Wandelement 3 - auf der Achse 16 liegt, liegt die Öffnung 11 über der bzw. im Wesentlichen konzentrisch zu dieser Gewindebohrung 13 des benachbarten (mittleren) Wandelements 3. Auf Höhe der anderen Achse - beim in Figur 3 obersten Wandelement 3 die Achse 15 - d.h. im Schnittbereich zwischen der Achse 15 und dem Flansch 10 weist der Flansch keine Öffnung, sondern eine durchgehende Struktur auf. Er ist im Bereich der Achse 15 mithin geschlossen ausgebildet. Folglich deckt der Flansch 10 die Durchgangsbohrung 14 des benachbarten Wandelements 3 ab. Mit anderen Worten ist der Flansch 10 ausgebildet, die Durchgangsbohrung 14 des benachbarten Wandelements 3 abzudecken. Hierzu umfasst der Flansch 10 einen durchgehenden Bereich 27, welcher ausgebildet ist, die Durchgangsbohrung 14 des auf der zweiten Seite 18 benachbarten Wandelements 3 abzudecken.

Wie ferner aus Figur 3 ersichtlich, weist jedes Wandelement 3 eine sich an einer Außenseite des Wandelements 3 senkrecht von der Grundplatte 5 und senkrecht zur Stapelrichtung 2 erstreckende Versteifungsrippe 20 auf. Auf Höhe der Bohrungen 13, 14 weist die Versteifungsrippe 20 Aussparungen 21 zum Durchführen des Werkzeuges in Stapelrichtung 2 auf.

Gemäß einer bevorzugten Ausführungsform kann die Versteifungsrippe 20 eine Aussparung 21 nur fluchtend mit bzw. im Wesentlichen konzentrisch zur Durchgangsbohrung 14 aufweisen und im Bereich unterhalb der Gewindebohrung 13 des die Versteifungsrippe 20 aufweisenden Wandelements 3, mithin im Schnitt der durch die Gewindebohrung 13 verlaufenden Achse mit der Versteifungsrippe 20, durchgehend ausgebildet sein.

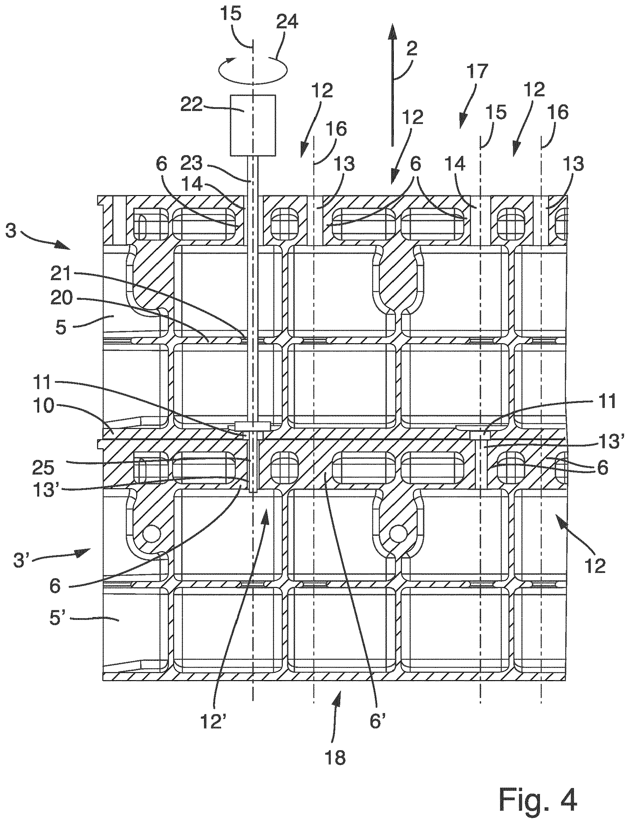

Figur 4 zeigt schematisch eine Schnittansicht durch zwei benachbarte Wandelemente 3 des Batteriegehäuses 1 aus Figur 3 entlang einer durch die Achsen 15, 16 definierten Ebene. Als erklärendes Beispiel ist hier beispielhaft eine Schraube 25 schematisiert, die durch die Öffnung 11 des in Figur 4 oberen Wandelements 3 geführt und in die Gewindebohrung 13' eines Paares 12' des in Figur 4 unteren Wandelements 3` eingeschraubt ist.

Ferner ist ein Werkzeug 22 zum Einschrauben der Schraube 25 in die Gewindebohrung 13' gezeigt. Eine Werkzeugklinge 23 des Werkzeuges ist parallel zur Stapelrichtung 2, in Wesentlichen entlang der ersten Achse 15 durch die Durchgangsbohrung 14 des Paares 12 und durch die Aussparung 21 der Versteifungsrippe 20 des oberen Wandelements 3 geschoben und kann so durch Drehen in Drehrichtung 24 zum Einschrauben der Schraube 25 in die Gewindebohrung 14 genutzt werden.

Da das in Figur 4 untere Wandelement 3 das unterste der Wandelemente 3 des Batteriegehäuses 1 darstellt und somit hier optional keine Durchgangsbohrung 14 notwendig ist, ist optional auf die Ausfräsung der Durchgangsbohrung im rechten Dom 6' des Paares 12' dieses untersten Wandelementes 3 verzichtet worden.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Batteriegehäuse
- 2: Stapelrichtung
- 3: Wandelement
- 4: Gehäusewand
- 5: Grundplatte
- 6: Bodenelement
- 7: Modulgehäuse
- 8: Elektrische Komponenten
- 9: Dom
- 10: Flansch
- 11: Öffnung
- 12: Paar an Bohrungen
- 13: Gewindebohrung
- 14: Durchgangsbohrung
- 15: Achse
- 16: Achse
- 17: Erste Seite
- 18: Zweite Seite
- 19: Absatz
- 20: Versteifungsrippe
- 21: Aussparung
- 22: Werkzeug
- 23: Werkzeugklinge
- 24: Drehrichtung
- 25: Schraube
- 26: Fahrzeugbatterie
- 27: Durchgehender Bereich

## Patentansprüche

1. Batteriegehäuse (1) für eine Fahrzeugbatterie (26), umfassend mindestens zwei in einer Stapelrichtung (2) übereinander gestapelter Wandelemente (3) zum Ausbilden je einer Gehäusewand,
**dadurch gekennzeichnet, dass**
jedes Wandelement (3) ein Paar (12) aus einer Durchgangsbohrung (14) und einer in einer Ebene senkrecht zur Stapelrichtung (2) neben der Durchgangsbohrung (14) angeordneten Gewindebohrung (13) zum Anschrauben eines in Stapelrichtung (2) direkt benachbarten Wandelementes (3) umfasst, wobei die Gewindebohrungen (13) und Durchgangsbohrungen (14) in Bezug auf die Stapelrichtung (2) alternierend übereinander angeordnet sind.

2. Batteriegehäuse (1) gemäß Anspruch 1, **dadurch gekennzeichnet, dass** jedes Wandelement (3) in Stapelrichtung (2) gesehen auf einer ersten Seite (15) das Paar (12) aus Bohrungen (13, 14) aufweist, und bevorzugt auf einer der ersten Seite (17) in Stapelrichtung (2) gegenüberliegenden zweiten Seite (18) ein Flansch (10) zum Anflanschen an die Gewindebohrung (13) des dort benachbarten Wandelements (3) umfasst, wobei bevorzugt der Flansch (10) eine Öffnung (11) zum Durchführen eines Gewindeabschnitts einer in die Gewindebohrung (13) des benachbarten Wandelements (3) geschraubten Schraube (25) umfasst, wobei bevorzugt die Öffnung (11) und die Durchgangsbohrung (14) eines Wandelements (3) auf einer in Stapelrichtung (2) orientierten gemeinsamen Achse (15, 16) liegen, und/oder wobei bevorzugt der Flansch (10) des Wandelements (3) im Schnittbereich mit einer durch die Gewindebohrung (15) dieses Wandelements (3) verlaufenden Achse (16, 15) einen durchgehenden Bereich (27) zum Abdecken der Durchgangsbohrung (14) des benachbarten Wandelements (3) umfasst.

3. Batteriegehäuse (1) gemäß Anspruch 1 oder 2, **dadurch gekennzeichnet, dass** die Wandelemente (3) jeweils in Form eines Gussteils, bevorzugt eines Druckgussteils, ausgebildet sind, wobei bevorzugt die Bohrungen (13, 14) des Paares (12) in am Wandelement (3) ausgebildeten, bevorzugt angegossenen, Domen (6) ausgebildet sind, bevorzugt an einer Außenseite des Wandelements (3).

4. Batteriegehäuse (1) gemäß einem der vorstehenden Ansprüche, **dadurch gekennzeichnet, dass** jedes Wandelement (3) eine sich in Stapelrichtung (2) und senkrecht zu dieser erstreckende Grundplatte (5) umfasst, wobei sich die Grundplatte (5) bevorzugt in Stapelrichtung (2) von einer ersten Seite (17) zu einer zweiten Seite (18) erstreckt, wobei bevorzugt mindestens eine Versteifungsrippe (20) sich senkrecht von der Grundplatte (5) erstreckt, bevorzugt an einer Außenseite des Wandelements (3), wobei bevorzugt zumindest eine Versteifungsrippe (20) sich quer, bevorzugt senkrecht zur Stapelrichtung (2) erstreckt und bevorzugt auf Höhe der Bohrungen (13, 14) zumindest eine Aussparung zum Durchführen eines Werkzeuges (22), bevorzugt einer Werkzeugklinge (23) eines Schraubwerkzeuges (22), in Stapelrichtung (2) umfasst.

5. Batteriegehäuse (1) gemäß einem der vorstehenden Ansprüche, **dadurch gekennzeichnet, dass** die Gewindebohrung (13) und die Durchgangsbohrung (14) eines Paares (12) senkrecht zur Stapelrichtung (2) und parallel zur Erstreckung einer Grundplatte (5) des Wandelements (3) nebeneinander angeordnet sind und/oder sich die Gewindebohrungen (13) und die Durchgangsbohrungen (14) in Stapelrichtung (2) erstrecken.

6. Batteriegehäuse (1) gemäß einem der vorstehenden Ansprüche, **dadurch gekennzeichnet, dass** die Durchgangsbohrung (14) zum Durchführen eines Werkzeugs (22), bevorzugt einer Werkzeugklinge (23) eines Schraubwerkzeuges (22), in Stapelrichtung (2) ausgebildet ist.

7. Batteriegehäuse (1) gemäß einem der vorstehenden Ansprüche, **dadurch gekennzeichnet, dass** die Paare (12) von Bohrungen (13, 14) in Stapelrichtung (2) übereinander angeordnet sind.

8. Batteriegehäuse (1) gemäß einem der vorstehenden Ansprüche, **dadurch gekennzeichnet, dass** die Gewindebohrung (13) als durchgehende Bohrung ausgebildet ist.

9. Fahrzeugbatterie (26), umfassend zumindest eine Batteriezelle, **gekennzeichnet durch** ein Batteriegehäuse (1) gemäß einem der vorstehenden Ansprüche.

10. Wandelement (3) zum Ausbilden einer Gehäusewand in einem Batteriegehäuse, bevorzugt einem Fahrzeugbatteriegehäuse, umfassend eine sich in einer Stapelrichtung (2) von einer ersten Seite (17) zu einer zweiten Seite (18) erstreckende Grundplatte (5), auf der ersten Seite (17) ein Paar (12) aus einer Durchgangsbohrung (14) und einer in einer Ebene senkrecht zur Stapelrichtung (2) neben der Durchgangsbohrung (14) angeordneten Gewindebohrung (13) zum Anschrauben eines in Stapelrichtung (2) an der ersten Seite (17) direkt benachbarten Wandelementes (3) und auf der zweiten Seite (18) einen Flansch (10) zum Anflanschen an ein an der zweiten Seite (18) direkt benachbartes Wandelement (3), wobei der Flansch (10) eine Öffnung (11) zum Durchführen eines Gewindeabschnitts einer Schraube (25) umfasst, wobei die Öffnung (11) und die Durchgangsbohrung (14) auf einer in Stapelrichtung (2) orientierten gemeinsamen Achse (15, 16) liegen.

11. Wandelement (3) gemäß Anspruch 10, **dadurch gekennzeichnet, dass** der Flansch (10) im Schnittbereich mit einer durch die Gewindebohrung (13) verlaufenden Achse (16, 15) einen durchgehenden Bereich (27) zum Abdecken einer Durchgangsbohrung (14) des an der zweiten Seite (18) benachbarten Wandelements (3) umfasst.
